# EUROPÄISCHE PATENTSCHRIFT

(11) **EP 1 716 023 B1**
(45) Veröffentlichungstag und Bekanntmachung des Hinweises auf die Patenterteilung: **13.06.2007**
(21) Anmeldenummer: 05726402.0
(22) Anmeldetag: 17.02.2005
(51) Int. Cl.: B60R 21/34

(54) **ANORDNUNG EINER FRONTKLAPPE MIT VERSTELLHEBEL AN EINEM FAHRZEUG**
ARRANGEMENT OF A FRONT HOOD COMPRISING AN ADJUSTING LEVER ON A VEHICLE
MONTAGE D'UN CAPOT AVANT POURVU D'UN LEVIER DE REGLAGE

(30) Priorität: 17.02.2004 DE 102004007858
(43) Veröffentlichungstag der Anmeldung: 02.11.2006
(73) Patentinhaber: Kirchhoff GmbH & Co. KG., 58553 Halver (DE)
(72) Erfinder: GUST, Peter, 58849 Herscheid (DE)
(74) Vertreter: Schneider, Uwe
(86) Internationale Anmeldenummer: PCT/DE2005/000273
(87) Internationale Veröffentlichungsnummer: WO 2005/077719

(56) Entgegenhaltungen:
- DE-A1- 10 116 717
- DE-A1- 19 712 961
- DE-U1- 20 314 673

## Beschreibung

Die Erfindung betrifft eine Anordnung einer Frontklappe an einem Fahrzeug gemäß Oberbegriff des Anspruches 1. Eine solche Anordnung ist aus der DE 203 146 734 bekannt, die als nächtsliegender Stand der Technik betrachtet wird.

Zur Verbesserung des Schutzes insbesondere von Fußgängern, die mit einem Fahrzeug in Standard-Unfallsituation kollidieren können, ist es seit einiger Zeit bekannt, an den Fahrzeugen durch verschiedenartige Einrichtungen dafür zu sorgen, daß die Aufprallzone des Fußgängers an dem Fahrzeug, üblicherweise im Bereich der Frontklappe, weicher ausgestaltet und daher der Aufprall des Fußgängers auf der Frontklappe abgemildert wird. Hierzu ist es beispielsweise beschrieben worden, in diesem Bereich Prallsäcke ähnlich wie dem Airbag im Inneren des Fahrzeuges vorzusehen, die durch entsprechende Sensoren im Frontbereich des Fahrzeuges ausgelöst werden, wenn eine Kollision detektiert wird.

Eine andere Lösung besteht darin, die Frontklappe des Fahrzeuges durch geeignete Maßnahmen vor dem Aufprall des Fußgängers aus ihrer Ruhelage knapp oberhalb des Motorblocks in eine Stellung zu verbringen, die einen größeren Abstand gegenüber den steifen Teilen des Fahrzeuges und insbesondere des Motorblocks aufweist. Hierzu wird vorgeschlagen, die Frontklappe in ihrem hinteren Bereich aufzustellen und dadurch eine gezielte Verformung der Frontklappe beim Aufprall des Fußgängers zu gewährleisten.

Zur Lösung dieses Grundgedankens ist eine Vielzahl von technischen Einrichtungen vorgeschlagen worden. So ist es beispielsweise aus der DE 2 814 107 A1 bekannt, eine spezielle Vorrichtung im hinteren Bereich der Frontklappe anzuordnen, die die Frontklappe in sehr kurzer Zeit gegenüber ihrer Ruhestellung anhebt, sofern ein entsprechender Aufprall detektiert wird. Weiterhin ist es beispielsweise aus der DE 197 12 961 A1 bekannt, hierfür die ohnehin zur normalen Betätigung der Frontklappe benötigte Scharniereinrichtung, die heute hauptsächlich in Form von Viergelenk-Scharnieren ausgebildet ist, derart zu modifizieren, daß eine zusätzliche Stellbewegung das Viergelenk-Scharnier im Falle einer Kollision aus seiner Ruhelage derart auslenkt, daß die an dem Viergelenk-Scharnier angelenkte Frontklappe angehoben wird. Hierzu dient ein Energiespeicher in Form einer Schraubenfeder, die vorgespannt unterhalb des Viergelenk-Scharniers angeordnet ist und bei einer Kollision aus ihrer vorgespannten Stellung ausgelöst und schlagartig entspannt wird. Die Schraubenfeder wirkt hierbei auf einen Hebel ein, der die beiden karosserieseitigen Gelenke des Viergelenk-Scharniers anhebt und damit das gesamte Viergelenk-Scharnier sowie die daran angelenkte Frontklappe anhebt.

Weiterhin ist es aus der DE 101 44 811 A1 bekannt, einen entsprechenden Energiespeicher statt auf einen unterseitig des Viergelenk-Scharniers angeordneten Hebel einwirken zu lassen, hierfür weitere Hebel an dem Viergelenk-Scharnier anzuordnen, deren Lage durch die schlagartige Freigabe des Energiespeichers zusätzliche Bewegungen des Viergelenk-Scharniers hervorrufen und damit größere Hübe der Frontklappe zu bewirken. Derartige Hilfslenker verkomplizieren aber die Kinematik des Viergelenk-Scharniers.

Darüber hinaus ist es aus der DE 103 43 882.3 A1 bekannt, die Übertragung der Bewegung, die durch die Energieabgabe des Energiespeichers im Falle einer Kollision frei wird und zu einer Bewegung der Frontklappe nach oben führt, direkt von dem Energiespeicher auf die Frontklappe zu leiten. Hierzu wird der Energiespeicher in Form einer Schraubenfeder ausgebildet, die bei der Energiefreigabe einen koaxial dazu angeordneten Stößel verschiebt, der direkt oder über an der Frontklappe selbst angeordnete Zwischenglieder die Frontklappe aufstellt. Hierdurch ist eine direkte und einfache Übertragung der bei der Auslösung des Energiespeichers frei werdenden Energie auf die Frontklappe möglich.

Aufgabe der vorliegenden Erfindung ist es daher, eine Anordnung einer Frontklappe an einem Fahrzeug derart weiterzubilden, daß eine einfach wirkende Scharniereinrichtung geschaffen wird, die im Falle eines Fußgängeraufpralls auf die Frontklappe eine schnelle und sichere Anhebung des hinteren Bereichs der Frontklappe ermöglicht und dabei noch einmal konstruktiv vereinfacht und zuverlässig aufgebaut ist.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einer Anordnung einer Frontklappe an einem Fahrzeug, mit zumindest einer in Fahrtrichtung betrachtet hinten liegenden Scharniereinrichtung in Form eines Viergelenkes mit einem langen und einem kurzen Lenker, wobei mittels der Scharniereinrichtung die Frontklappe beim normalen Öffnen und Schließen verschwenkbar und bei einer Kollision des Fahrzeugs im hinteren Bereich anhebbar ist. Eine derartige gattungsgemäße Anordnung einer Frontklappe wird dadurch weiter gebildet, daß die Scharniereinrichtung ein Federelement aufweist, das bei einer Kollision des Fahrzeugs einen Verstellhebel betätigt, der wiederum direkt oder über Zwischenelemente an der Frontklappe liegt, wobei die frontklappenseitigen Gelenke des Viergelenks gelenkig an einem Schwenkhebel festgelegt sind, der im Ruhezustand mit einem Ende lösbar an der Frontklappe festgelegt und mit seinem anderen Ende um ein im Bereich der Anlenkung der Verstelleinrichtung an der Frontklappe angeordnetes Drehgelenk relativ zur Frontklappe verschwenkbar ist, und der Verstellhebel bei einer Kollision des Fahrzeugs die Frontklappe, geführt durch die Lenker des Viergelenks und den einseitig von der Frontklappe sich lösenden Schwenkhebel, gegenüber dem Ruhezustand anhebt. Eine derartige erfindungsgemäße Anordnung ermöglicht es, eine direkte Verstellung der Frontklappe einfach durch die Verschwenkung des Verstellhebels zu bewirken, wodurch man ohne aufwendige Zwischenglieder auskommt und die Anordnung daher auch nach langem Stillstand bzw. Nicht-Betätigung sicher funktioniert. Auch ist die Ausbildung der Anordnung über einen Hebelmechanismus besonders einfach konstruktiv umzusetzen und hinsichtlich seines Verhaltens zu beherrschen. Die normale Funktion der Frontklappe beim Öffnen wird durch die Anordnung nicht verändert und erfolgt daher in gewohnter Weise und ohne Veränderungen für den Benutzer. Die lösbare Festlegung des Schwenkhebels an der Frontklappe wird hierbei erst im Falle einer Kollision gelöst und erst dadurch die zusätzliche Kinematik für die Anhebung der Frontklappe im hinteren Bereich im Falle einer Kollision mit einem Fußgänger oder dgl. bereitgestellt. Gleichzeitig wird bei der Ausführung dieser zusätzlichen Anhebungsbewegung die Frontklappe weiterhin sicher geführt und kann daher auch nur im konstruktiv vorgebbaren Umfang angehoben werden. Eine Beeinträchtigung der Sicht des Fahrers des Fahrzeuges durch die Frontklappe ist dadurch auch im Falle der Kollision sicher ausgeschlossen.

In einer ersten vorteilhaften Weiterbildung ist der Schwenkhebel mit seinem einen Ende derart lösbar an der Frontklappe festgelegt ist, daß er bei Überschreiten einer vorgebbaren Kraft in Richtung auf die Lageänderung des Verstellhebels bei der Auslösung des Verstellhebels seine lösbare Verbindung mit der Frontklappe löst und um sein andernends an der Frontklappe angeordnetes Drehgelenk verschwenkbar ist. Hierdurch ist gewährleistet, daß der Schwenkhebel nicht schon durch kleinere Belastungen beispielsweise beim Durchfahren von Schlaglöchern oder dgl. seine feste Verbindung zu der Frontklappe lösen kann, sondern erst dann, wenn beispielsweise durch das Einwirken des Verstellhebels auf die Frontklappe ein entsprechender Schwellenwert der Belastung überschritten wird. Hierdurch wird dann die zusätzliche Bewegungsmöglichkeit der Scharniereinrichtung freigesetzt und das Aufstellen der Frontklappe im hinteren Bereich ermöglicht. Von Vorteil ist es hierbei, wenn der Schwenkhebel mit einem Ende über eine kraftschlüssige und/oder formschlüssige Verbindung an der Frontklappe festgelegt ist. Eine derartige kraftschlüssige und/oder formschlüssige Verbindung kann beispielsweise durch eine mechanische Rastverbindung gebildet sein, bei der eine Funktionskante an dem Schwenkhebel eine frontklappenseitig angeordnete Gegenform hintergreift und mit dieser im normalen Ruhezustand der Frontklappe verrastet ist. Eine derartige Rastverbindung ist konstruktiv einfach umzusetzen und auch bei langer Nicht-Betätigung immer wieder sicher zu lösen, so daß auch nach jahrelangem Nicht-Betrieb der Scharniereinrichtung im Sinne eines Unfallsschutzes die Betätigung immer sicher gewährleistet ist. Auch kann durch entsprechende Einstelleinrichtungen dafür gesorgt werden, daß die Kraft zum Lösen der Rastverbindung vorgegebene Werte genau einhält und damit die Betriebssicherheit erhöht wird.

Eine vorteilhafte Weiterbildung sieht vor, daß das frontklappenseitige Ende des Verstellhebels über einen im wesentlichen bolzenartigen Abschnitt an der Frontklappe in kraftschlüssiger Verbindung steht. Eine derartige Verbindung hat den Vorteil, auch nach längerer Nicht-Betätigung ein sicheres Lösen von Verstellhebel und bolzenartigem Abschnitt voneinander zu gewährleisten. Dies ist insbesondere vorteilhaft, wenn der im wesentlichen bolzenartige Abschnitt an der Frontklappe bei der normalen Betätigung der Scharniereinrichtung zum Öffnen der Frontklappe mittels des Viergelenks dem Verstellhebel abhebbar ist. Damit ist immer gewährleistet, daß die Zuordnung der Frontklappe zu dem Verstellhebel einen definierten Zustand erreicht und damit bei einer Anhebung des hinteren Bereichs der Frontklappe im Kollisionsfall eine definierte Beweglichkeit der Frontklappe und eine eindeutige Übertragung der Kräfte von dem Energiespeicher auf die Frontklappe vorliegt.

Von Vorteil ist es hierbei, daß bei einem Freigeben des Verstellhebels im Falle einer Kollision der Verstellhebel den bolzenartigen Abschnitt an der Frontklappe schlagartig in Richtung auf die angehobene Stellung der Frontklappe zu verschiebt und dabei der Schwenkhebel an seinem lösbar an der Frontklappe festgelegten Ende seine kraftschlüssige Verbindung mit der Frontklappe löst und um sein andernends gebildetes Drehgelenk relativ zur Frontklappe verschwenkt. Das Zusammenwirken des Schwenkhebels mit den beiden Lenkern des Viergelenk-Scharnieres gewährleistet hierbei die zusätzliche benötigte Beweglichkeit der Frontklappe zum Aufstellen in ihrem hinteren Bereich. Damit ist aber die Bahn der Frontklappe bei diesem Aufstellen sowie die maximale Aufstellhöhe eindeutig definiert und die Frontklappe während dieser ganzen Bewegung und auch in der aufgestellten Stellung sicher karosserieseitig festgelegt.

Im Ruhezustand ist es von Vorteil, wenn das frontklappenseitige Ende des Verstellhebels derart angeordnet und karosserieseitig festgelegt ist, daß der im wesentlichen bolzenartige Abschnitt an der Frontklappe an dem Verstellhebel anliegt. In diesem Zustand bildet der Verstellhebel einfach ein festes Gegenlager für den bolzenartigen Abschnitt der Frontklappe, damit die Frontklappe nach einem normalen Öffnen und Schließen wieder in einen definierten Zustand zurück gebracht werden kann und dort für den normalen Betrieb des Fahrzeuges sicher gehalten ist.

Hinsichtlich der Kinematik der Frontklappe beim Aufstellen in ihrem hinteren Bereich im Kollisionsfall ist es von Vorteil, wenn das Drehgelenk des Schwenkhebels an der Frontklappe und der bolzenartige Abschnitt der Frontklappe einen identischen Drehpunkt aufweisen. Hierdurch ist zum einen konstruktiv die Beweglichkeit des Schwenkhebels und gleichzeitig die Lagerung des bolzenartigen Abschnittes an der Frontklappe einfach herzustellen, zum anderen ergibt sich in weiterer Ausgestaltung, daß durch die Drehbewegung des Schwenkhebels einerseits und die Stellbewegung des Verstellhebels andererseits die Frontklappe im Falle einer Kollision eine reine Schwenkbewegung um eine vorderseitig des Fahrzeuges an der Frontklappe angeordnete Verschlußeinrichtung ohne Relativverschiebungen der Frontklappe in Fahrzeuglängsrichtung relativ zu der Verschlußeinrichtung ausführt. Hierdurch ist sicher ausgeschlossen, daß die Frontklappe beim Aufstellen in ihrem hinteren Bereich sich an der vorderseitig angeordneten Verschlußeinrichtung verklemmen kann. Tritt im Bereich dieser vorderseitig angeordneten Verschlußeinrichtung eine Verschiebung der Frontklappe in Längsrichtung des Fahrzeuges auf, so kann es zu einem Verklemmen und zu einem nicht vollständigen Aufstellen der Frontklappe kommen, wodurch die Schutzwirkung der aufgestellten Frontklappe gemindert oder sogar zu Null reduziert wird. Dies kann durch die Abstimmung der Kinematik des Schwenkhebels mit der direkten Einwirkung des Verstellhebels auf die Frontklappe und die Lage der jeweiligen Drehpunkte zueinander derart zu Null reduziert werden, daß im Bereich der vorderseitig angeordneten Verschlußeinrichtung keinerlei Längsverschiebung der Frontklappe auftritt.

Von Vorteil ist es, wenn das Federelement eine im normalen Betriebszustand der Anordnung vorgespannte mechanische Schenkelfeder aufweist. Derartige mechanische Federn sind auch nach jahrelangem Nicht-Betrieb immer sicher betätigbar, mechanisch robust aufgebaut und können durch entsprechende Kräfte jederzeit wieder neu gespannt werden. Auch Verschmutzungen oder Vibrationen im normalen Fahrbetrieb beeinträchtigen im Kollisionsfall die Funktionen mechanischer Federn nicht. Durch die Formgebung und die Hebel der Schenkelfeder können entsprechende Anlenkungen erreicht werden, die ein optimales Verstellen des Verstellhebels im Kollisionsfall gewährleisten.

Weiterhin ist es denkbar, daß der Verstellhebel im Ruhezustand durch eine Auslösevorrichtung in seinem durch das Federelement vorgespannten Zustand gehalten ist. Eine derartige Auslösevorrichtung, die in weiterer Ausgestaltung beispielsweise im Falle einer Kollision über einen Aktor ansteuerbar sein und über Hebeleinrichtungen mechanisch verstärkt den Verstellhebel aus seinem vorgespannten Zustand freigeben kann, sichert den Verstellhebel gegenüber unbeabsichtigtem Lösen und ermöglicht gleichwohl eine auch nach jahrelangem Nicht-Betrieb sichere Freigabe des Verstellhebels.

Die Betätigung der Auslösevorrichtung läßt sich besonders einfach gestalten, wenn der Aktor einen elektromechanischen Schalter aufweist. Ein derartiger Aktor kann die im Fahrzeug ohnehin vorhandene elektrische Energie nutzen und ermöglicht eine relativ hohe Stellkraft sowie kurze Ansprechzeit.

Von Vorteil ist es weiterhin, wenn die Auslösevorrichtung einen hakenartigen Abschnitt aufweist, der im Ruhezustand einen zugeordneten Abschnitt des Verstellhebels hintergreift und den Verstellhebel gegen die Wirkung des Federelement des lagesichert. Hierbei kann in weiterer Ausgestaltung der hakenartige Abschnitt der Auslösevorrichtung, den Verstellhebel und das Federelement nach der Auslösung der Frontklappe wieder in ihren Ausgangszustand verbringbar und erneut betätigbar sein. Durch eine derartige einfache und betriebssichere Mechanik kann die Kraft des Aktors sicher umgesetzt und das Federelement einfach ausgelöst werden. Gleichzeitig ist das System reversibel gestaltbar, so daß nach einer Kollision die Scharniereinrichtung leicht wieder in den normalen Ruhezustand verbracht werden kann, was insbesondere beispielsweise bei Fehlauslösungen ohne nachfolgenden Aufprall von Wichtigkeit und gleichzeitig kostensenkend ist.

Ebenfalls ist es in anderer Ausgestaltung denkbar, daß das Federelement ein fluidisches Medium aufweist. Hierzu können beispielsweise hydraulische Medien, Gasmedien oder auch pyrotechnisch erzeugte fluidische Medien genutzt werden, um in kurzer Zeit eine hohe Energiedichte in die Scharniereinrichtung einzubringen.

Montage- und justagetechnisch ist es von Vorteil, wenn der Schwenkhebel und der bolzenartige Abschnitt mittels eines gemeinsamen Montageteils an der Frontklappe festgelegt sind. Hierdurch kann die ganze Baugruppe vormontiert als Ganzes an der Frontklappe angebracht und justiert werden, wodurch die Montagekosten stark gesenkt werden können. Auch ist die Unfallgefahr bei der Montage stark reduziert, da ansonsten bei der Montage notwendige Betätigungen des Schwenkhebels durch die Federkraft unterbleiben können.

Eine besonders bevorzugte Ausführungsform der erfindungsgemäßen Anordnung zeigt die Zeichnung.

Es zeigen:
- Figur 1: - eine Ausgestaltung der erfindungsgemäßen Scharniereinrichtung in einer schematischen Darstellung im Ruhezustand,
- Figur 2: - die erfindungsgemäße Scharniereinrichtung gemäß Figur 1 nach der Auslösung des Verstellhebels in einem leicht angehobenen Zustand,
- Figur 3: - die erfindungsgemäße Scharniereinrichtung gemäß Figur 1 in einem weiter angehobenen Zustand,
- Figur 4: - die erfindungsgemäße Scharniereinrichtung gemäß Figur 1 in ihrer am weitesten angehobenen Endlage,
- Figur 5: - die erfindungsgemäße Scharniereinrichtung gemäß Figur 1 in einer für den normalen Öffnungszustand der Frontklappe charakteristischen Endlage,
- Figur 6: - den Verstellhebel und das Federelement der erfindungsgemäßen Scharniereinrichtung gemäß Figur 1 in einer konstruktiv weiter durchgebildeten Darstellung in der Ausgangslage, einer Zwischenlage und der am weitesten ausgelenkten Endlage nach dem Auslösen im Kollisionsfall.

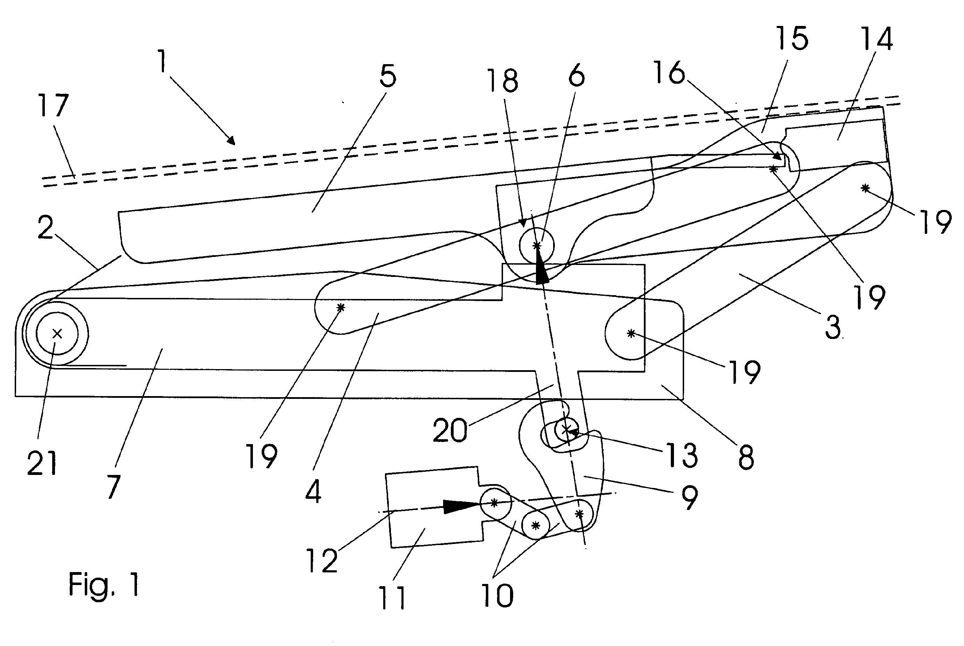

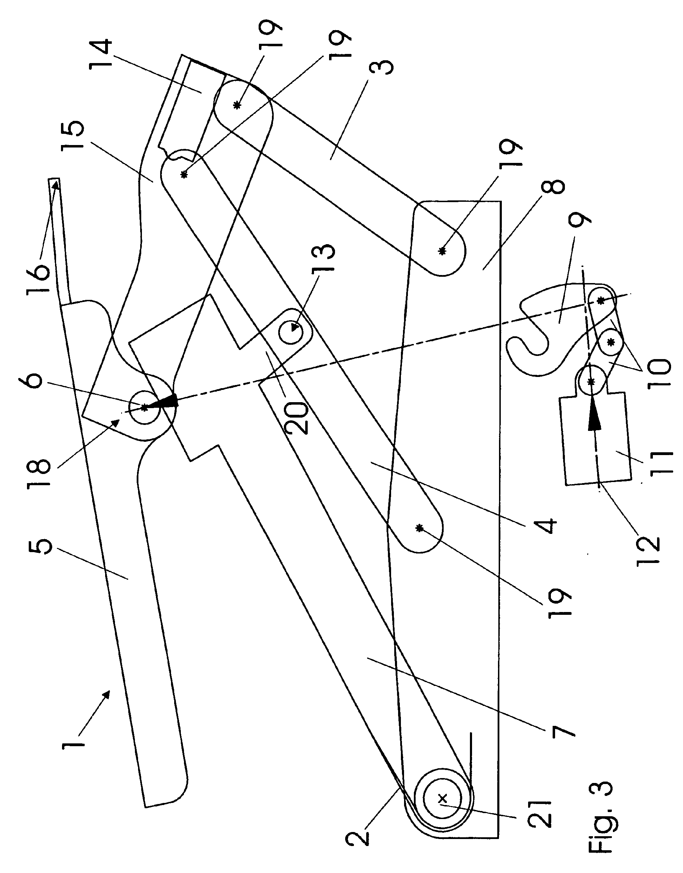

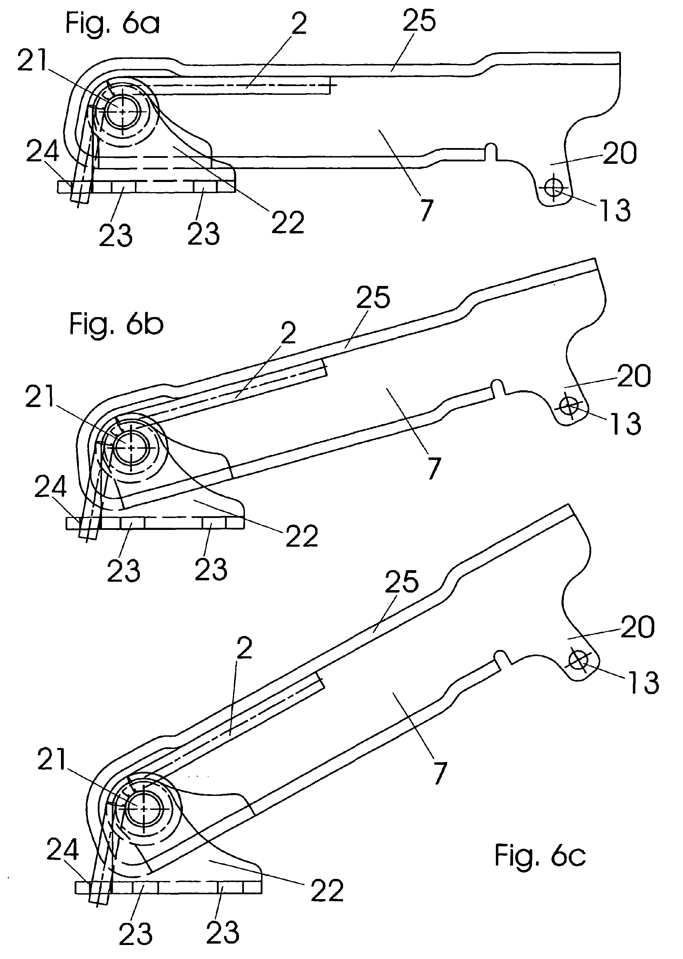

Die Figuren 1 bis 5 und 6 zeigen eine bevorzugte Ausgestaltung einer erfindungsgemäßen Scharniereinrichtung, wobei die Figuren 1 bis 5 eine sehr schematische Darstellung des Funktionsprinzips geben und in der Figur 6 die konstruktive Durchbildung des Verstellhebels und des Federelementes einer entsprechend gestalteten Scharniereinrichtung aufzeigen. Gleiche Sachnummern bezeichnen in allen Figuren gleiche Bauteile bzw. Funktionen.

Die erfindungsgemäße Scharniereinrichtung geht aus von einer an sich bekannten Viergelenk-Scharniereinrichtung, bei der an einem an einem Fahrzeug karosserieseitig festlegbaren Grundwinkel 8 über jeweils ein Gelenk 19 zwei Lenker 3, 4 drehbar festgelegt sind. Die beiden Lenker 3, 4 weisen unterschiedliche Längen auf und beschreiben damit die Bewegungsbahn einer aus einer Montageplatte 5 und einem Schwenkhebel 15 gebildeten Einheit, mit der die beiden Lenker 3, 4 mit ihren gegenüberliegenden Endbereichen ebenfalls durch Gelenke 19 drehbar verbunden sind. Hierbei sind die Montageplatte 5 und der Schwenkhebel 15 in noch näher beschriebener Weise aneinander lösbar festgelegt und können eine Relativdrehung um ein Drehgelenk 6 zueinander ausführen. Die beiden Drehgelenke 19 der Lenker 3, 4, die der nur angedeuteten Frontklappe 17 zugewandt an der Einheit aus Montageplatte 5 und Schwenkhebel 15 festgelegt sind, sind genauer gesagt an dem Schwenkhebel 15 voneinander beabstandet drehbar festgelegt. Die Montageplatte 5 dient hierbei in nicht weiter dargestellter Weise zur Festlegung an der Frontklappe 17, die beispielsweise den Motorraum eines nicht genauer dargestellten Fahrzeuges abdeckt. Zur Minderung von Schäden, die ein Fußgänger bei einem typischen Fußgänger-Unfall durch die Kollision mit der Frontklappe 17 des Fahrzeuges erleiden kann, wird hierbei durch die Scharniereinrichtung in noch beschriebener Weise die Frontklappe 17 gegenüber ihrer in der Figur 1 dargestellten Ruhestellung angehoben, sofern ein entsprechender Aufprall eines Fußgängers oder dgl. durch nicht weiter dargestellte Sensoren im Fontbereich des Fahrzeuges detektiert wird.

Zur quasi schlagartigen Aufstellung der Frontklappe 17 in ihrem in Fahrtrichtung gesehen hinteren Bereich dient hierbei ein hier nur sehr schematisch angedeutetes Federelement 2, das vorteilhafterweise als Schenkelfeder ausgebildet sein kann, die vorgespannt um das Drehgelenk 21 eines Verstellhebels 7 angeordnet, mit einem Schenkel an den Verstellhebel 7 angelegt und in noch näher beschriebener Weise durch eine Auslöseeinrichtung 9, 10, 11, 13 in der vorgespannten Stellung gehalten ist. Das Federelement 2 drückt hierbei, wie in der Figur 6 noch genauer zu erkennen ist, den Verstellhebel 7 nach einer Freigabe durch die Auslöseeinrichtung 9, 10, 11, 13 mit seinem der Frontklappe 17 zugeordneten Endbereich so in Richtung auf die Frontklappe 17 zu, daß die Frontklappe 17 gegenüber der normalen Ruhestellung in noch näher beschriebener Weise aufgestellt wird.

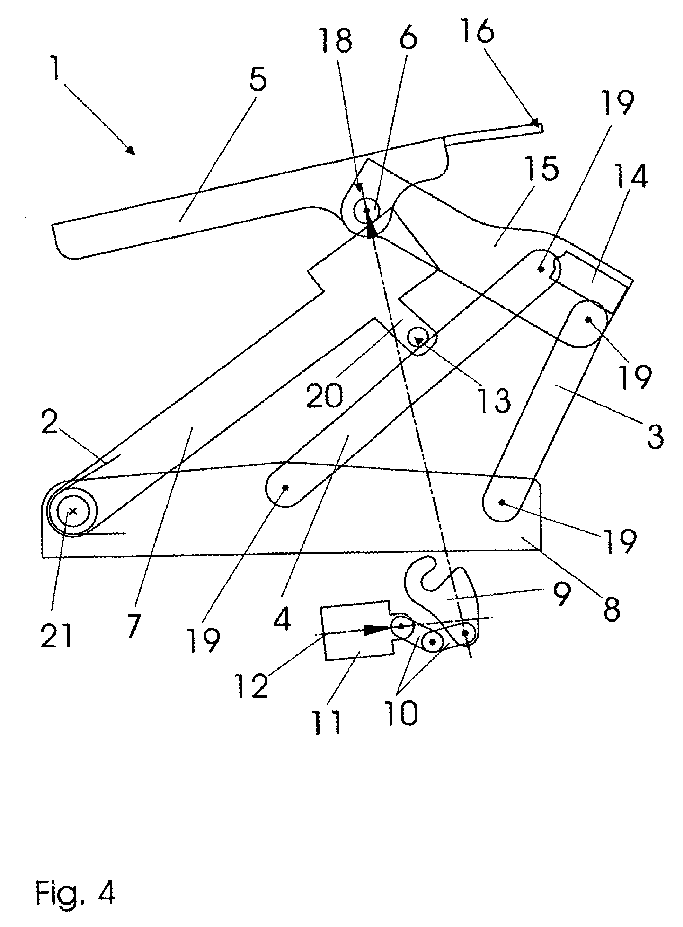

An dem Verstellhebel 7 ist an einem Ansatz 20 ein bolzenartiger Vorsprung 13 angeordnet, der von einem hakenartigen Auslösehebel 9 der Auslösevorrichtung 9, 10, 11 umgriffen wird. Hierdurch ist in dieser Ruhestellung der Verstellhebel 7 gegen die Kraft des Federelementes 2 gesichert und steht gleichzeitig unter der Vorspannung des Federelementes 2. Bei einem Freigeben des Auslösehebels 9 in noch näher beschriebener Weise wird der Energiegehalt des vorgespannten Federelementes 2 schlagartig frei und verdreht den Verstellhebel 7 schlagartig in eine in der Figur 4 genauer zu erkennende obere Endlage. Hierdurch wird ein bolzenartiger Abschnitt 18 an der Montageplatte 5 und damit die an der Montageplatte 5 festgelegte Frontklappe 17 ebenfalls schlagartig in Richtung der Verdrehung des Verstellhebels 7 bewegt und die Frontklappe 17 dabei in Ihrem hinteren Bereich aufgestellt. Der Verstellhebel 7 liegt hierbei an dem Gelenkbolzen 6 im Bereich des bolzenartigen Abschnittes 18 an und drückt diesen Gelenkbolzen 6 mit der Montageplatte 5 und dem Schwenkhebel 15 nach oben. Dabei liegt der Verstellhebel 7 an dem Gelenkbolzen 6 punktförmig an, ohne daß eine besondere Festlegung getroffen wurde.

Die Führung der Frontklappe 17 bei dieser Bewegung erfolgt dabei einerseits über die Lenker 3, 4 des Viergelenkes und zum anderen über das Zusammenwirken von Montageplatte 5 und Schwenkhebel 15. Zu Beginn der Bewegung der Frontklappe 17 nach oben (dargestellt in Figur 1) bilden die Montageplatte 5 und der Schwenkhebel 15 eine Einheit, da sie über eine Rastverbindung aus einer Rastkante 14 und einer Gegenkante 16 kraftschlüssig miteinander verbunden sind. Die Rastkante 14, die in den Figuren 1 bis 4 nur schematisch angedeutet ist, wird hierbei etwa durch ein auf dem Schwenkhebel 15 fest angeordnetes und mit einer Nase versehenes Zusatzteil gebildet. Da der Schwenkhebel 15 und die Montageplatte 5 durch das Drehgelenk 6 drehbar zueinander gelagert sind, ist eine eindeutige Zuordnung zwischen Rastkante 14 und Gegenkante 16 in der Ruhestellung gemäß Figur 1 gewährleistet. Wird nun das Federelement 2 durch Betätigen des Auslösehebels 9 und Freigeben des Ratselements 13 in Richtung der Verdrehung des Verstellhebels 7 bewegt, so wird die Montageplatte 5 auf einer anderen Bahn bewegt werden als der Schwenkhebel 15, der durch die Gelenke 19 der Lenker 3, 4 nur eine eingeschränkte Beweglichkeit aufweist. Hierdurch wird die Rastverbindung zwischen der Rastkante 14 und der Gegenkante 16 zwangsläufig aufgehoben und der Schwenkhebel 15 führt eine Relativdrehung zu der Montageplatte 5 und der daran angeordneten Frontklappe 17 aus. Die Frontklappe 17 ist nicht dargestellter Weise, aber grundsätzlich bekannt im vorderen Bereich des nicht dargestellten Fahrzeuges durch eine Verschlußeinrichtung gehalten und kann um diese Verschlußeinrichtung lediglich eine Drehbewegung ausführen. Daher ist die mögliche Bahn der Frontklappe 17 in ihrem hinteren Bereich ebenfalls vorgegeben, so daß sich die Montageplatte 5 in entsprechender Weise um die vorderseitige Verschlußeinrichtung herum drehen wird.

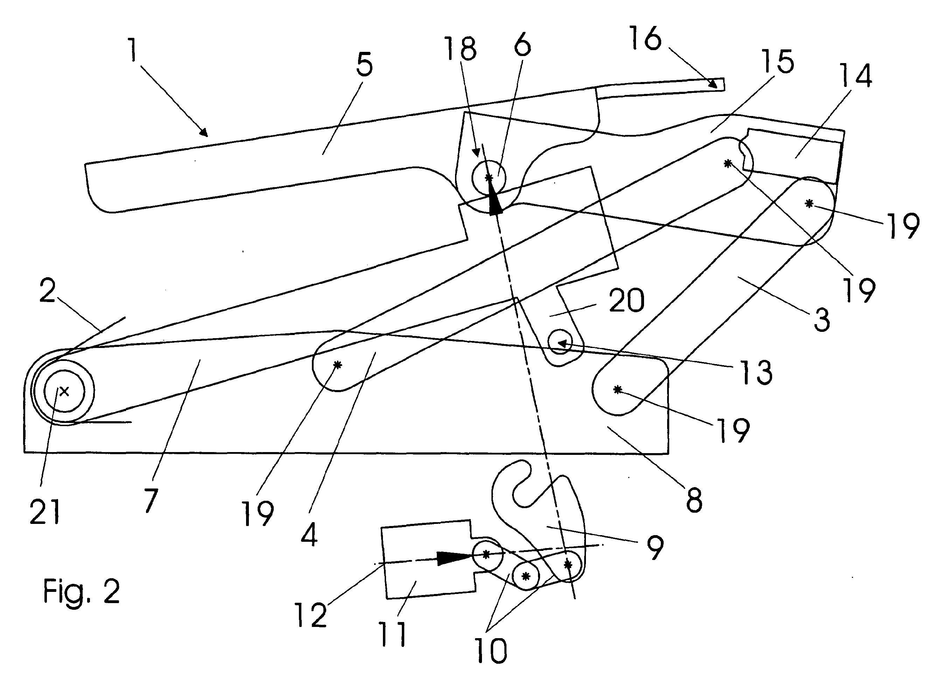

Wie in den Figuren 2, 3 und 4 besser zu erkennen ist, verdreht sich mit zunehmender Bewegung des Verstellhebels 7 der Schwenkhebel 15 immer weiter relativ zu der Montageplatte 5, bis er wie in Figur 4 dargestellt seine kinematisch mögliche Endlage erreicht hat. In dieser Endlage ist die Frontklappe 17 maximal möglich aufgestellt und bietet daher im Falle einer Kollision eines Fußgängers mit der Frontklappe 17 eine entsprechende Nachgiebigkeit durch Verformung in den freien Bereich unterhalb der Frontklappe 17.

Die Auslösung der Federelementes 2 erfolgt hierbei durch einen nicht dargestellten Sensor im Frontbereich des Fahrzeuges gesteuert, indem ein Aktor 11 bestromt wird und eine Verschiebung eines entsprechenden Stellgliedes des Aktors 11 in Verstellrichtung 12 bewirkt. Diese Verstellbewegung wird über zwischengestaltete Übertragungshebel 10 auf den Auslösehebel 9 übertragen, der daraufhin in nicht weiter dargestellter Weise eine Schwenkbewegung zur Freigabe des Rastelements 13 an dem Verstellhebel 7 ausführt. Mit einer derartigen Auslöseeinrichtung 9, 10, 11, 13 kann auch nach langer Nicht-Betätigung sicher gewährleistet werden, daß der Auslösehebel 9 das Rastelement 13 frei gibt. Hierdurch wird dann der Verstellhebel 7 freigegeben und wie schon beschrieben durch das Federelement 2 in Hubrichtung der Frontklappe 17 beschleunigt. Der Aktor 11, die Übertragungshebel 10 sowie der Auslösehebel 9 und die zugehörigen Drehgelenke sind zum Beispiel auf einer nicht dargestellten Montageplatte vormontiert und können daher einfach in das Fahrzeug eingebaut werden.

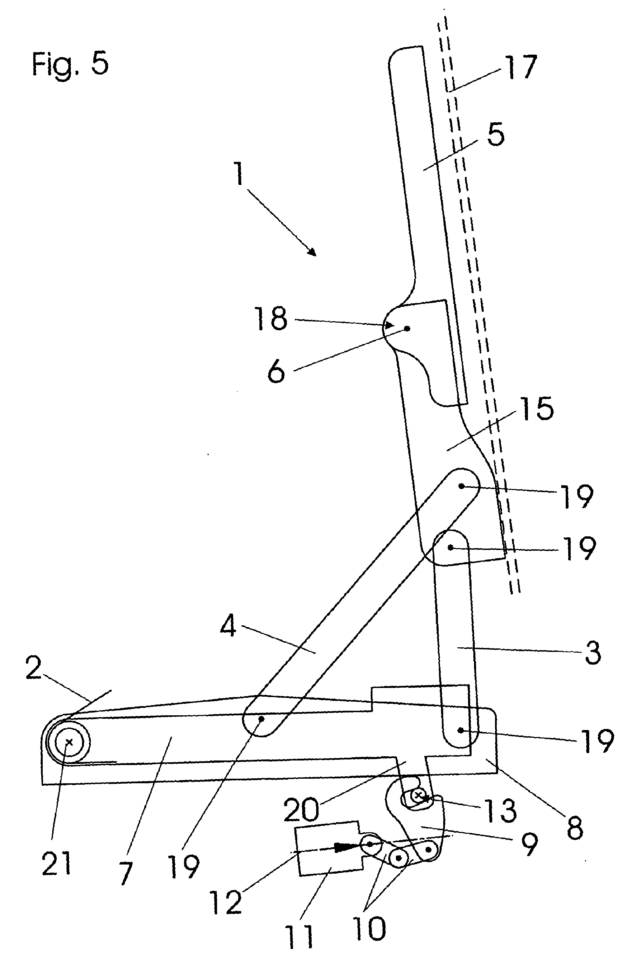

Wie insbesondere aus der Figur 5 zu entnehmen ist, ist die Anlenkung des Verstellhebels 7 in seinem der Frontklappe 17 zugewandten Endbereich über eine punktförmige Auflage an dem Bolzen 6 realisiert, der im bolzenartigen Abschnitt 18 an der Montageplatte 5 und damit indirekt an der Frontklappe 17 angeordnet ist. Diese Art der Übertragung der Verstellbewegung des Verstellhebels 7 hat ihren Grund darin, daß die Scharniereinrichtung 1 im normalen Betrieb ein Abheben der Frontklappe 17 wie in Figur 5 dargestellt erlauben muß, die zum Öffnen, beispielsweise eines Motorraums des Fahrzeuges genutzt werden kann. Hierzu wird in grundsätzlich bekannter Weise die Bewegung der Frontklappe 17 allein durch die Lenker 3, 4 des Viergelenkes gesteuert, wozu aber die Frontklappe 17 sich relativ zu dem Verstellhebel 7 bewegen können muß. Hierzu kann der bolzenartigen Abschnitt 18 von dem Verstellhebel 7 abgehoben werden und wird nach dem Schließen der Frontklappe 17 durch die kinematische Führung der Lenker 3, 4 des Viergelenkes auf den Verstellhebel 7 aufgelegt. Damit wird aber die normale Öffnungsbewegung der Frontklappe 17 durch die Erweiterung der Scharniereinrichtung 1 um die Aufstellfunktion in keiner Weise beeinträchtigt, gleichzeitig aber eine genaue Zuordnung von Frontklappe 17 zum Verstellhebel 7 erreicht.

In der Figur 6 mit den Teilfiguren 6a bis 6c ist in einer konstruktiv genaueren Darstellung die Schwenkbewegung des Verstellhebels 7 beim Anheben der Frontklappe 17 sowie die daran angeordnete Schenkelfeder des Federelementes 2 genauer zu erkennen. Der Verstellhebel 7 ist hierbei ein etwa aus Blechteilen abgewinkelt gebogenes Bauteil, das im Bereich eines Drehgelenkes 21 einseitig verschwenkbar an einer Anschraubkonsole 22 gehalten ist, die wiederum fahrzeugseitig mittels durch die Bohrungen 23 steckbar angeordneter, nicht weiter dargestellter Schrauben festgelegt werden kann. Um das Drehgelenk 21 des Verstellhebels 7 herum ist eine Schenkelfeder 2 angeordnet, die mit einem Schenkel durch eine Einstecköffnung 24 der Anschraubkonsole 22 hindurchgesteckt ist und mit dem anderen Schenkel sich auf der Innenseite eines an dem Verstellhebel 7 gebildeten Anlagewinkels 25 abstützt. Hierbei ist die Schenkelfeder des Federelementes 2 in vorgespannter Konfiguration eingebaut, so daß der Verstellhebel 7 ohne die Festlegung an dem bolzenartigen Ratselement 13 des Ansatzes 20 und die in den Figuren 1 bis 4 dargestellte Auslöseeinrichtung 9, 10, 11 in die in der Figur 6c dargestellte Lage übergehen würde. Oberseitig und in der Figur 6 nicht weiter dargestellt ist dann der Bolzen 6 des bolzenartigen Abschnittes 18 angeordnet, der durch die Verschwenkung des Verstellhebels 7 die Frontklappe 17 in die angehobene Stellung verbringt.

Es ist selbstverständlich ebenfalls denkbar, das Federelement 2 in anderer Form auszugestalten, beispielsweise auch mittels fluidischer Medien den Verstellhebel 7 in zu der vorstehend beschriebenen Weise analoger Art in eine angehobene Stellung zu verbringen.

### Sachnummernliste

- 1 -: Scharniereinrichtung
- 2 -: Federelement
- 3 -: Lenker Viergelenk
- 4 -: Lenker Viergelenk
- 5 -: Montageplatte Frontklappe
- 6 -: Drehgelenk/Bolzen
- 7 -: Verstellhebel
- 8 -: Grundwinkel
- 9 -: Auslösehebel
- 10 -: Übertragungshebel
- 11 -: Aktor
- 12 -: Verstellrichtung Aktor
- 13 -: Rastelement
- 14 -: Rastkante
- 15 -: Schwenkhebel
- 16 -: Gegenkante
- 17 -: Frontklappe
- 18 -: bolzenartiger Abschnitt
- 19 -: Drehgelenk Viergelenk
- 20 -: Ansatz
- 21 -: Drehgelenk Verstellhebel
- 22 -: Anschraubkonsole
- 23 -: Bohrungen
- 24 -: Einstecköffnung Federelement
- 25 -: Anlagewinkel

## Patentansprüche

1. Anordnung einer Frontklappe (17) an einem Fahrzeug, mit zumindest einer in Fahrtrichtung betrachtet hinten liegenden Scharniereinrichtung (1) in Form eines Viergelenkes (3, 4) mit einem langen und einem kurzen Lenker, wobei mittels der Scharniereinrichtung (1) die Frontklappe (17) beim normalen Öffnen und Schließen verschwenkbar und bei einer Kollision des Fahrzeugs im hinteren Bereich anhebbar ist,
**dadurch gekennzeichnet, daß**
die Scharniereinrichtung (1) ein Federelement (2) aufweist, das bei einer Kollision des Fahrzeugs einen Verstellhebel (7) betätigt, der wiederum direkt auf die Frontklappe (17) einwirkt und an dieser direkt oder über Zwischenelemente (5, 6) anliegt, wobei die frontklappenseitigen Gelenke (19) des Viergelenks (3, 4) gelenkig an einem Schwenkhebel (15) festgelegt sind, der im Ruhezustand mit einem Ende lösbar an der Frontklappe (17) festgelegt und mit seinem anderen Ende um ein im Bereich (18) der Zuordnung des Verstellhebels (7) zu der Frontklappe (17) angeordnetes Drehgelenk (6) relativ zur Frontklappe (17) verschwenkbar ist, und der Verstellhebel (7) bei einer Kollision des Fahrzeugs die Frontklappe (17), geführt durch die Lenker (3, 4) des Viergelenks und den einseitig von der Frontklappe (17) sich lösenden Schwenkhebel (15), gegenüber dem Ruhezustand anhebt.

2. Anordnung gemäß Anspruch 1, **dadurch gekennzeichnet, daß** der Schwenkhebel (15) mit seinem einen Ende derart lösbar an der Frontklappe (17) festgelegt ist, daß er bei Überschreiten einer vorgebbaren Kraft in Richtung auf die Lageänderung des Verstellhebels (7) bei der Auslösung des Verstellhebels (7) seine lösbare Verbindung mit der Frontklappe (17) löst und um sein andernends an der Frontklappe (17) angeordnetes Drehgelenk (6) verschwenkbar ist.

3. Anordnung gemäß Anspruch 2, **dadurch gekennzeichnet, daß** der Schwenkhebel (15) mit einem Ende über eine kraftschlüssige und/oder formschlüssige Verbindung (16, 14) an der Frontklappe (17) festgelegt ist.

4. Anordnung gemäß Anspruch 3, **dadurch gekennzeichnet, daß** die kraftschlüssige und/oder formschlüssige Verbindung (16, 14) durch eine mechanische Rastverbindung gebildet ist, bei der eine Funktionskante (16) an dem Schwenkhebel (15) eine frontklappenseitig angeordnete Gegenform (14) hintergreift und mit dieser im normalen Ruhezustand der Frontklappe (17) verrastet ist.

5. Anordnung gemäß einem der vorstehenden Ansprüche, **dadurch gekennzeichnet, daß** das frontklappenseitige Ende des Verstellhebels (7) über einen im wesentlichen bolzenartigen Abschnitt (18) an der Frontklappe (17) in kraftschlüssiger Verbindung steht.

6. Anordnung gemäß Anspruch 5, **dadurch gekennzeichnet, daß** der im wesentlichen bolzenartige Abschnitt (18) an der Frontklappe (17) bei der normalen Betätigung der Scharniereinrichtung (1) zum Öffnen der Frontklappe (17) mittels des Viergelenks (3, 4) von dem Verstellhebel (7) abhebbar ist.

7. Anordnung gemäß einem der vorstehenden Ansprüche, **dadurch gekennzeichnet, daß** bei einem Freigeben des Verstellhebels (7) im Falle einer Kollision der Verstellhebel (7) den bolzenartigen Abschnitt (18) an der Frontklappe (17) schlagartig in Richtung auf die angehobenen Stellung der Frontklappe (17) zu verschiebt und dabei der Schwenkhebel (15) an seinem lösbar an der Frontklappe (17) festgelegten Ende seine kraftschlüssige Verbindung (16, 14) mit der Frontklappe (17) löst und um sein andernends gebildetes Drehgelenk (6) relativ zur Frontklappe (17) verschwenkt.

8. Anordnung gemäß einem der vorstehenden Ansprüche, **dadurch gekennzeichnet, daß** das frontklappenseitige Ende des Verstellhebels (7) im normalen Ruhezustand der Frontklappe (17) derart angeordnet und karosserieseitig festgelegt ist, daß der im wesentlichen bolzenartige Abschnitt (18) an der Frontklappe (17) an dem Verstellhebel (7) anliegt.

9. Anordnung gemäß einem der vorstehenden Ansprüche, **dadurch gekennzeichnet, daß** das Drehgelenk (6) des Schwenkhebels (15) an der Frontklappe (17) und der bolzenartige Abschnitt (18) der Frontklappe (17) einen identischen Drehpunkt aufweisen.

10. Anordnung gemäß einem der vorstehenden Ansprüche, **dadurch gekennzeichnet, daß** durch die Drehbewegung des Schwenkhebels (15) einerseits und die Schwenkbewegung des Verstellhebels (7) andererseits die Frontklappe (17) im Falle einer Kollision eine reine Schwenkbewegung um eine vorderseitig des Fahrzeuges an der Frontklappe (17) angeordnete Verschlußeinrichtung im wesentlichen ohne Relativverschiebungen der Frontklappe (17) in Fahrzeuglängsrichtung relativ zu der Verschlußeinrichtung ausführt.

11. Anordnung gemäß einem der vorstehenden Ansprüche, **dadurch gekennzeichnet, daß** das Federelement (2) eine im normalen Betriebszustand der Anordnung vorgespannte mechanische Schenkelfeder aufweist.

12. Anordnung gemäß einem der vorstehenden Ansprüche, **dadurch gekennzeichnet, daß** der Verstellhebel (7) im Ruhezustand durch eine Auslösevorrichtung (9, 10, 11) in seinem durch das Federelement (2) vorgespannten Zustand gehalten ist.

13. Anordnung gemäß einem der vorstehenden Ansprüche, **dadurch gekennzeichnet, daß** die Auslösevorrichtung (9, 10, 11) im Falle einer Kollision über einen Aktor (10) ansteuerbar und über Hebeleinrichtungen (10) mechanisch verstärkt den Verstellhebel (7) aus seinem vorgespannten Zustand freigibt.

14. Anordnung gemäß Anspruch 13, **dadurch gekennzeichnet, daß** der Aktor (11) einen elektromechanischen Schalter aufweist.

15. Anordnung gemäß einem der vorstehenden Ansprüche, **dadurch gekennzeichnet, daß** die Auslösevorrichtung (9, 10, 11) einen hakenartigen Abschnitt (9) aufweist, der im Ruhezustand einen zugeordneten Abschnitt (13) des Verstellhebels (7) hintergreift und den Verstellhebel (7) gegen die Wirkung des Federelementes (2) lagesichert.

16. Anordnung gemäß Anspruch 15, **dadurch gekennzeichnet, daß** der hakenartige Abschnitt (9) der Auslösevorrichtung (9, 10, 11), der Verstellhebel (7) und das Federelement (2) nach der Auslösung der Frontklappe (17) wieder in ihren Ausgangszustand verbringbar und erneut betätigbar sind.

17. Anordnung gemäß einem der vorstehenden Ansprüche, **dadurch gekennzeichnet, daß** das Federelement (2) ein fluidisches Medium aufweist.

18. Anordnung gemäß einem der vorstehenden Ansprüche, **dadurch gekennzeichnet, daß** der Schwenkhebel (15) und der bolzenartige Abschnitt (18) mittels eines gemeinsamen Montageteils (5) an der Frontklappe (17) festgelegt sind.

## Claims

1. Arrangement of a front gate (17) on a vehicle, having at least one hinge device (1) that lies in the rear, viewed in the direction of travel, in the form of a four-bar mechanism (3, 4) having a long and a short arm, whereby the front gate (17) can be pivoted during normal opening and closing by means of the hinge device (1), and can be raised in the rear region in the case of a collision of the vehicle,
**characterized in that**
the hinge device (1) has an spring element (2) that activates an adjusting lever (7) in the case of a collision of the vehicle, which device in turn acts directly on the front gate (17) and which fits direct or through intermediate elements (5, 6), to it, whereby the front-gate-side articulations (19) of the four-bar mechanism (3, 4) are fixed in place on a pivoting lever (15), in articulated manner, which lever is releasably fixed in place on the front gate (17) in the state of rest, with one end, and can be pivoted relative to the front gate (17) with its other end, about a rotary articulation (6) disposed on the front gate (17) in the region (18) of the relation of the adjusting lever (7) to the front gate (17), and the adjusting lever (7) raises the front gate (17), guided by the arms (3, 4) of the four-bar mechanism, and the pivoting lever (15) that is released from the front gate (17) on one side, as compared with the state of rest, in the case of a collision of the vehicle.

2. Arrangement according to claim 1, **characterized in that** the pivoting lever (15) is releasably fixed in place on the front gate (17) with its one end, in such a manner that when a force that can be predetermined, in the direction towards a change in position of the adjusting lever (7), is exceeded, it releases its releasable connection with the front gate (17) when the adjusting lever (7) is triggered, and can be pivoted about its rotary articulation (6) disposed on the front gate (17) on the other end.

3. Arrangement according to claim 2, **characterized in that** the pivoting lever (15) can be fixed in place on the front gate (17) with one end, by way of a non-positive-lock and/or a positive-lock connection (16, 14).

4. Arrangement according to claim 3, **characterized in that** the non-positive-lock and/or the positive-lock connection (16, 14) is formed by means of a mechanical snap-in connection, in which a functional edge (16) on the pivoting lever (15) engages behind a counter-shape (14) disposed on the front gate side, and is locked in place with it in the normal state of rest of the front gate (17).

5. Arrangement according to one of the preceding claims, **characterized in that** the front-gate-side end of the adjusting lever (7) stands in a non-positive-lock connection with an essentially bolt-like segment (18) on the front gate (17).

6. Arrangement according to claim 5, **characterized in that** the essentially bolt-like segment (18) on the front gate (17) can be raised from the adjusting lever (7) during normal activation of the hinge device (1) for opening the front gate (17) by means of the four-bar mechanism (3, 4).

7. Arrangement according to one of the preceding claims, **characterized in that** when the adjusting lever (7) is released in the case of a collision, the adjusting lever (7) suddenly displaces the bolt-like segment (18) on the front gate (17) in the direction towards the raised position of the front gate (17) and, in this connection, the pivoting lever (15) releases its non-positive-lock connection (16, 14) with the front gate (17), at its end that is releasably fixed in place on the front gate (17), and pivots about its rotary articulation (6), relative to the front gate (17), formed at its other end.

8. Arrangement according to one of the preceding claims, **characterized in that** the front-gate-side end of the adjusting lever (7) is disposed and fixed in place on the vehicle body side, in the normal state of rest of the front gate (17), in such a manner that the essentially bolt-like segment (18) on the front gate (17) fits close to the adjusting lever (7).

9. Arrangement according to one of the preceding claims, **characterized in that** the rotary articulation (6) of the pivoting lever (15) on the front gate (17) and the bolt-like segment (18) of the front gate (17) have an identical point of rotation.

10. Arrangement according to one of the preceding claims, **characterized in that** by means of the rotary movement of the pivoting lever (15), on the one hand, and the swiveling movement of the adjusting lever (7), on the other hand, the front gate (17) performs a pure pivoting movement about a closure device disposed on the front gate (17), on the front end of the vehicle, basically without a relative displacement of the front gate (17) in the longitudinal direction of the vehicle, relative to the closure device.

11. Arrangement according to one of the preceding claims, **characterized in that** the spring element (2) has a biased mechanical torsion spring in the normal operating status of the arrangement.

12. Arrangement according to one of the preceding claims, **characterized in that** the adjusting lever (7) is held in its biased state by the spring element (2), in its state of rest, by means of a triggering device (9, 10, 11).

13. Arrangement according to one of the preceding claims, **characterized in that** the triggering device (9, 10, 11) can be controlled by way of an actor (10) in the case of a collision, and releases the adjusting lever (7) from its biased state with mechanical reinforcement by way of lever devices (10).

14. Arrangement according to claim 13, **characterized in that** the actor (11) has an electromechanical switch.

15. Arrangement according to one of the preceding claims, **characterized in that** the triggering device (9, 10, 11) has a hook-like (9) segment that engages behind a related segment (13) of the adjusting lever (7), and secures the adjusting lever (7) in its position, counter to the effect of the spring element (2).

16. Arrangement according to claim 15, **characterized in that** the hook-like segment (9) of the triggering device (9, 10, 11), the adjusting lever (7) and the spring element (2) can be brought back into their starting state after the front gate (17) has been triggered, and can be activated again.

17. Arrangement according to one of the preceding claims, **characterized in that** the spring element (2) has a fluid medium.

18. Arrangement according to one of the preceding claims, **characterized in that** the pivoting lever (15) and the bolt-like segment (18) are fixed in place on the front gate (17) by means of a common assembly part (5).

## Revendications

1. Disposition d'un capot frontal (17) sur un véhicule, avec au moins un dispositif à charnière (1), situé à l'arrière vu dans le sens de la marche du véhicule, en forme d'une quadruple articulation (3, 4) avec un bras court et un bras long, de telle façon que le capot frontal (17) peut pivoter à l'aide du dispositif à charnière (1) en cas d'ouverture et de fermeture normales et être soulevée dans la partie arrière en cas de collision,
**caractérisé par le fait que**
le dispositif à charnière (1) dispose d'un élément des ressort (2) qui commande en cas de collision du véhicule un levier de manoevre (7) agissant directement sur le capot frontal (27) et assemblé de manière amovible avec cette dernière directement ou par des élémentes intermédiare (5, 6), de telle façon que les articulations côté capot frontal (19) de la quadruple articulation (3, 4) sont fixées de façon flexible sur un levier pivotant (15) dont une extrémité étant fixée amoviblement sur le capot frontal (17) au repos et l'autre extrémité pouvant pivoter autour d'une articulation tournante disposée dans la partie d'une affectation du levier de manoevre (7) sur le capot frontal (17), et en cas de collision du véhicule, le levier de manoevre (7), par rapport à l'état au repos, soulève le capot frontal (17), guidé par les bras (3, 4) de la quadruple articulation et le levier pivotant (15) se détachant d'un côté du capot frontal (27).

2. Disposition selon revendication 1, **caractérisée par le fait que** le levier pivotant (15) est fixé amoviblement avec une extrémité sur le capot frontal (17) de manière à ce qu'il défait son assemblage amovible avec le capot frontal (17) lorsqu'il dépasse une force à prédéfinir agissant sur le déplacement du levier de manoevre (7) au moment du déclenchement du levier de manoevre (7) et peut pivoter autour de son articulation tournante (6) disposée sur le capot frontal (17).

3. Disposition selon revendication 2, **caractérisée par le fait que** le levier pivotant (15) est fixé par adhérence et/ou à engangement positif (16, 14) avec une extrémité sur le capot frontal (17).

4. Disposition selon revendication 3, **caractérisée par le fait que** l'assemblage par adhérence et/ou á engagement positif (16, 14) se fait par un encliquetage mécanique fonctionnant de telle manière qu'une arête fonctionnelle (16) sur le levier pivotant (15) saisie à l'arrière une contre-forme (14) disposée côté capot frontal et avec laquelle elle est enclenchée lorsque le capot frontal (17) se trouve en état de repos normal.

5. Disposition selon une des revendications précédentes, **caractérisée par le fait que** l'extrémité du levier de manoevre (7) se trouvant côté capot frontal est assemblée par adhérence au moyen d'un logement en forme de poêle avec un segment principalement en forme de goujon (18) sur le capot frontal (17).

6. Disposition selon revendication 5, **caractérisée par le fait que** le segment principalement en forme de goujon (18) situé sur le capot frontal (17) puisse être soulevé de levier de manoevre (7) lors d'une commande normale du dispositif à charnière (1) pour l'ouverture du capot frontal (17) au moyen d'une quadruple articulation (3, 4).

7. Disposition selon une des revendications précédentes, **caractérisée par le fait que** lors d'un déblocage en cas de collision du levier de manoevre (7) fait déplacer brusquement le segment en forme de goujon (18) sur le capot frontal (27) en direction de la position soulevée du capot frontal (17) et le levier pivotant (15) défait cependant son assemblage par adhérence (16, 14) avec le capot frontal (17) sur son extrémité fixée de manière amovible sur le capot frontal (17) et pivote autour de son articulation tournante (6) sur l'autre extrémité par rapport au capot frontal (17).

8. Disposition selon une des revendications précédentes, **caractérisée par le fait qu'**en état de repos du capot frontal (17) l'extrémité du levier de manoevre (7) située côté capot frontal est disposée et fixée côté carrosserie de manière à ce que le segment essentiellement en forme de goujon (18) du capot frontal (17) colle au levier de manoevre (7).

9. Disposition selon une des revendications précédentes, **caractérisée par le fait que** l'articulation tournante (6) du levier pivotant (15) sur le capot frontal (17) et le segment en forme de goujon (18) du capot frontal (17) présentent un point de pivotement identique.

10. Disposition selon une des revendications précédentes, **caractérisée par le fait que** par le mouvement rotatif du levier pivotant (15) d'une part et le mouvement pivotant du levier de manoevre (7) d'autre part, le capot frontal (17) réalise en cas de collision un simple mouvement pivotant autour d'un dispositif de verrouillage disposé à l'avant du véhicule sur le capot frontal (17) en substance sans déportements relatifs du capot frontal (17) dans le sens de la longueur de véhicule relatif au dispositif de verrouillage.

11. Disposition selon une des revendications précédentes, **caractérisée par le fait que** l'élément de ressort (2) dispose d'un ressort à boudins ressort qui est précontraint mécanique dans l'état fonctionnement normale de cette disposition.

12. Disposition selon une des revendications précédentes, **caractérisée par le fait que** le levier de manoevre (7) en état de repos est tenu en état de précontrainte par l'élément de ressort (2) au moyen d'un dispositif de déclenchement (9, 10, 11).

13. Disposition selon une des revendications précédentes, **caractérisée par le fait que** le dispositif de déclenchement (9, 10, 11) en cas de collision puisse être commandé au moyen d'un acteur (11) et débloque le levier de manoevre (7) depuis son état précontraint au moyen de dispositifs de levage (10) mécaniquement amplifiés.

14. Disposition selon la revendication 13, **caractérisée par le fait que** l'acteur (11) dispose d'un commutateur électromécanique.

15. Disposition selon une des revendications précédentes, **caractérisée par le fait que** le dispositif de déclenchement (9, 10, 11) dispose d'un segment en forme de crochet (9) qui, en état de repos, saisie à l'arrière un segment correspondant (13) du levier de manoevre (17) et stabilise la position de levier de manoevre contre l'impact l'élément de ressort (2).

16. Disposition selon la revendication 15, **caractérisée par le fait qu'**après le déclenchement du capot frontal (17), le segment en forme de crochet (9) du dispositif de déclenchement (9, 10, 11), le levier de manoevre (7) et l'élément de ressort (2) peuvent être remis à l'état initial et commandés de nouveau.

17. Disposition selon une des revendications précédentes, **caractérisée par le fait que** l'élément de ressort (2) dispose d'un milieu fluide.

18. Disposition selon une des revendications précédentes, **caractérisée par le fait que** le levier pivotant (15) et le segment en forme de goujon (18) sont fixés sur le capot frontal (17) au moyen d'un élément de montage commun (5).
